# EUROPEAN PATENT SPECIFICATION

(11) **EP 2 795 417 B1**
(45) Date of publication and mention of the grant of the patent: **23.03.2016**
(21) Application number: 12818946.1
(22) Date of filing: 19.12.2012
(51) Int. Cl.: G05D 11/13, A01K 5/02

(54) **METHOD AND FEED MIXER ARRANGEMENT FOR MIXING BATCHES OF FEED AND FEEDING SYSTEM COMPRISING SUCH FEED MIXER ARRANGEMENT**
VERFAHREN UND FUTTERMISCHERANORDNUNG ZUM MISCHEN VON FUTTERCHARGEN UND ZUFUHRSYSTEM MIT EINER SOLCHEN FUTTERMISCHERANORDNUNG
PROCÉDÉ ET AGENCEMENT DE MÉLANGEUR D'ALIMENTS POUR ANIMAUX POUR MÉLANGER DES LOTS D'ALIMENTS POUR ANIMAUX ET SYSTÈME D'ALIMENTATION COMPRENANT UN TEL AGENCEMENT DE MÉLANGEUR D'ALIMENTS POUR ANIMAUX

(30) Priority: 20.12.2011 SE 1151221; 20.12.2011 US 201161577808 P
(43) Date of publication of application: 29.10.2014
(73) Proprietor: DeLaval Holding AB, 147 21 Tumba (SE)
(72) Inventor: SVENSSON, Erik, S-155 93 Nykvarn (SE)
(74) Representative: Lilliehorn, Tobias
(86) International application number: PCT/SE2012/051442
(87) International publication number: WO 2013/095281

(56) References cited:
- WO-A1-2008/123820
- RU-C1- 2 366 496
- RU-C2- 2 197 014
- SU-A1- 735 224
- SU-A2- 1 556 639
- SU-A2- 1 732 919
- US-A1- 2006 230 787

## Description

### TECHNICAL FIELD OF THE INVENTION

The present invention relates to a method and a feed mixer arrangement for mixing batches of feed according to selected recipes, wherein the batches of feed are to be fed to at least one group of animals. The invention also relates to a feeding system comprising such a feed mixer arrangement.

### BACKGROUND OF THE INVENTION

Feed costs comprise 40-50% of the cost of milk production. Implementation and management of feeding systems to sustain high levels of milk production and control feed costs are crucial to the profitability of expanding dairies. Considerations have to be made regarding nutritional demands of the herd (including grouping), ration management (includes analysis of the feed, cost and availability), feed preparation, feed transport, feed distribution, and feed consumption control. Grouping of the animals in different groups can e.g. be made according to their milk production, age, stage of lactation, and body health.

The amount of suitable feed given to the animals may be calculated to achieve maximum profit, maximum milk production, milk of a desired quality, and/or animals of a desired condition. Different feeding programs comprise total mixed rations (TMR) with group-wise feeding of all feed and partial mixed rations (PMR) with group-wise feeding of some feed, including ensilage and concentrate, and individual feeding of additional concentrate. Alternatively, roughage and/or ensiled feed are fed on a group-wise level, whereas all concentrate feed are fed on an individual basis.

The document WO 2008/123820 discloses a method to produce batches of feed for animals according to a plurality of recipes, the method comprising mixing several raw components according to one of the plurality of recipes, delivering the batch to one of several feed tables as well as continuously monitoring the remaining quantity in each of the feed tables so as launch the mixing of a new batch according to the recipe among the plurality of recipes that corresponds to the mixed food which has been detected as being almost consumed.

### SUMMARY OF THE INVENTION

When preparing batches of feed according to selected recipes to be fed to groups of animals, some feed batches will be smaller than others. If there is a group consisting of very few animals, e.g. ill animals, the corresponding recipe may indicate that a very small batch as compared to the maximum loading capacity of the feed mixer should be mixed. A feed mixer is typically designed to operate close to its maximum loading capacity; if very small amounts of ingredients are charged into the feed mixer, maybe such that the feed mixer is only filled to e.g. 1-20 % of its maximum loading capacity, the cutting and mixing performance may be reduced, which would lead to non-optimum feeding with respect to e.g. feed composition, structure, and particle size, which, in turn, could lead to reduced milk production and deteriorated animal welfare.

Further, when measuring very small amounts of ingredients to be charged into the feed mixer, the measuring accuracy will, for each of the ingredients, be deteriorated, which would also lead to non-optimum feeding at least with respect to the feed composition.

It is therefore an object of the present invention to provide a method and a feed mixer arrangement for mixing batches of feed according to selected recipes, which avoid the drawbacks of the prior art as disclosed above.

It is a further object of the invention to provide such method and arrangement, which are simple, robust, effective, fast, precise, accurate, reliable, safe, easy to use, of low cost, and fully or at least partly automated.

These objects among others are, according to the present invention, attained by methods and arrangements as claimed in the appended patent claims.

According to one aspect of the invention there is provided a method for mixing batches of feed according to selected recipes, wherein the batches of feed are to be fed to at least one group of animals. According to the method a feed mixer is charged with ingredients according to a first recipe; the ingredients are mixed according to the first recipe in the feed mixer, thereby producing a first batch of mixed feed according to the first recipe; mixed feed of the first batch is discharged from the feed mixer; the amount of mixed feed of the first batch left in the feed mixer after discharging is determined; the composition thereof is deduced based on the first recipe; a second recipe, according to which ingredients are to be charged into the feed mixer, is provided; the second recipe is modified based on the determined amount of mixed feed of the first batch left in the feed mixer and the deduced composition thereof; the feed mixer is charged with ingredients according to the modified second recipe; and the ingredients according to the modified second recipe are mixed in the feed mixer with mixed feed of the first batch left in the feed mixer, thereby producing a second batch of mixed feed, wherein the modified second recipe is determined such that the second batch of mixed feed is a batch of mixed feed substantially according to the second recipe or having a similar nutritional content as a batch of feed according to the second recipe.

Preferably, the mixed feed of the first batch discharged from the feed mixer is to be fed to a group of animals having a feed amount requirement which is less, preferably considerably less, than the entire amount of mixed feed of the first batch. The mixed feed of the first batch discharged from the feed mixer and the second batch of mixed feed discharged from the feed mixer may be fed to different groups of animals.

The invention is based on the realization that the problem with the preparation of small batches can be avoided by preparing large batches (the first recipe above corresponds to such a large batch) and by discharging from the feed mixer, each time, only the amount of feed corresponding to the small batch. The remaining feed in the feed mixer is each time used for a following batch (the second batch above corresponds to such a following batch) of feed to be fed to another group of animals or to the same group of animals (since the recipe for a certain group of animals may change with time). The recipe for such another group of animals has each time to be modified to take the mixed feed (i.e. at least the amount and composition thereof) left in the feed mixer into account. Such recipe is in such manner modified, wherein the amount and composition of the feed left in the feed mixer can be regarded as the first ingredient of the modified recipe.

In some cases, the recipe for such another group of animals comprises at least the ingredients, and the amounts thereof, as left in the feed mixer from the foregoing batch. In such instance, the modified recipe can be formed such that the amount and composition of the following batch of mixed feed *exactly* matches the amount and composition of mixed feed according to the unmodified recipe. The only difference here is that the mixed feed left in the feed mixer is mixed twice. In case the feed mixer also reduces particle size and changes structure of the mixed feed e.g. by means of cutting, of course the doubled mixing time affects the particle size and structure (the mixed feed will have smaller particle size and a more compact structure). If this is an important factor, small amounts of one or more ingredients having large particle size and less compact structure, such as e.g. hay, ensilage, grass, etc., can be added to increase the overall particle size and reducing the overall compactness. However, such additions will be made in smaller amounts only, such that still the following batch of mixed feed is a batch of mixed feed *substantially* according to the unmodified recipe. Alternatively, the mixing time of the following batch is shortened.

In other cases, the recipe for such another group of animals does not comprise all the ingredients, or at least not the amounts thereof, as left in the feed mixer from the foregoing batch. In such instance, the modified recipe cannot be formed such that the amount and composition of the following batch of mixed feed exactly matches the amount and composition of mixed feed according to the unmodified recipe. However, the modified recipe can be formed such that the amount and composition of the following batch of mixed feed match the amount and composition of mixed feed according to the unmodified recipe as good as possible. Ingredients having similar nutritional contents may be exchanged for one another. Other ingredients or additives may be added to obtain a following batch of mixed feed, which at least has a *similar* nutritional content as a batch of mixed feed according to the unmodified recipe.

The wording *substantially according to the second (or unmodified recipe)* may be quantified in the following terms: all, at least 90 %, at least 80 %, or at least 70 % of the ingredients of the second batch coincide with the ingredients of the second recipe and are present in amounts which deviate from the corresponding amounts of the second recipe with less then 1, less than 10, less than 20, or less than 30%.

The wording *having a similar nutritional content as a batch of the second (or unmodified) recipe* may be quantified in the following terms: all, at least 90 %, at least 80 %, or at least 70 % of the nutritional components of the second batch coincide with the nutritional components of the second recipe and are present in amounts which deviate from the corresponding amounts of the second recipe with less then 1, less than 10, less than 20, or less than 30 %.

The amount of mixed feed of the first batch left in the feed mixer after discharging is preferably determined by means of weighing or by knowledge or measurement of the total amount of mixed feed of the first batch and knowledge or measurement of the amount of mixed feed of the first batch left in the feed mixer. Hereby, the composition of the mixed feed of the first batch left in the feed mixer after discharging can be deduced based on the first recipe.

The first and second recipes are typically different; otherwise the second recipe would not have to be modified with respect to the relative amounts of the ingredients. The ingredients according to the first and second recipes may be the same or may be different. If they are the same or if they are different but the second recipe contains all the ingredients of the first recipe and one or more ingredients, the second batch of mixed feed can, in some instances, be made to *exactly* match a batch of mixed feed according to the second recipe (with respect to ingredients and amounts thereof).

If ingredients according to the first and second recipes are different and the second recipe does not contain all the ingredients of the first recipe, the second batch of mixed feed can only be made to have a nutritional content similar as a batch of mixed feed according to the second recipe. To this end, the ingredients according to the second and modified second recipes may be different.

Further, it may be important to keep track of the water content in the feed ingredients since this will directly affect the nutritional content per weight of the feed ingredient. This is especially important for a feed ingredient such as hay, ensilage, or grass, which may vary extensively in water content. Thus, the content of water is measured in at least one of the ingredients according to the modified second recipe or in the mixed feed of the first batch left in the feed mixer after discharging, wherein the second recipe is further modified depending on the measured content of water. Hereby, the amount of water in the feed ingredients can be taken into account in the feed ration preparation.

Since the mixed feed of the first batch left in the feed mixer will be mixed twice; the mixing time can be altered for the preparation of the second batch. For instance, the mixing of the ingredients according to the modified second recipe with the mixed feed of the first batch left in the feed mixer may be performed during a mixing time which is dependent on the first recipe, on the mixing time during which the ingredients according to the first recipe were mixed in the feed mixer, on the determined amount of mixed feed of the first batch left in the feed mixer after discharging, and/or on the deduced composition thereof. Hereby, a proper mixing time can be determined based on various input parameters.

Similarly, a characteristic representative of the particle size or structure of the mixed feed of the first batch left in the feed mixer after discharging can be measured, wherein the mixing of the ingredients according to the modified second recipe with the mixed feed of the first batch left in the feed mixer is performed during a mixing time which is dependent on the measured characteristic. Hereby, the mixing time can even more in detail be determined on the actual particle size or structure of the mixed feed of the first batch left in the feed mixer.

Finally, it shall be appreciated that the water content of the ingredients and feed to be mixed in the second batch may affect the mixing time in order to obtain mixed feed of a desired particle size and/or structure. To this end, the content of water is measured in any of the ingredients according to the modified second recipe or in the mixed feed of the first batch left in the feed mixer after discharging, wherein the mixing of the ingredients according to the modified second recipe with the mixed feed of the first batch left in the feed mixer is performed during a mixing time which is dependent on the measured content of water.

According to a second aspect of the invention, there is provided a feed mixer arrangement for mixing batches of feed according to selected recipes, wherein the batches of feed are to be fed to different groups of animals or to the same group of animals (but at different times), comprising a control device, a feed mixer operatively connected to the control device, and a charging arrangement operatively connected to the control device. The control device is arranged (i) to control the charging arrangement to charge the feed mixer with ingredients according to a first recipe, (ii) to control the feed mixer to mix the ingredients according to the first recipe, thereby producing a first batch of mixed feed according to the first recipe; and (iii) to control the feed mixer to discharge a portion of the mixed feed of the first batch. The feed mixer arrangement further comprises determining means arranged to determine the amount of mixed feed of the first batch left in the feed mixer after discharging. The control device is further arranged (iv) to deduce, based on the first recipe, the composition of the mixed feed of the first batch left in the feed mixer, (v) to provide a second recipe according to which ingredients are to be charged into the feed mixer, (vi) to modify the second recipe based on the determined amount of mixed feed of the first batch left in the feed mixer and the deduced composition thereof, (vii) to control the charging arrangement to charge the mixer with ingredients according to the modified second recipe, and (viii) to control the feed mixer to mix the ingredients according to the modified second recipe with mixed feed of the first batch left in the feed mixer, thereby producing a second batch of mixed feed, wherein the modified second recipe is determined such that the second batch of mixed feed is a batch of mixed feed substantially according to the second recipe or having a similar nutritional content as a batch of feed according to the second recipe.

It is a further object of the invention to provide a feeding system which comprises a feed mixer arrangement fulfilling the objects of the invention identified above. This object is attained by a fully automated or semi-automated feeding system for feeding different groups of animals with mixed feed according to different recipes comprising a feed distribution system and the feed mixer arrangement of the second aspect of the invention. Preferably, the feed distribution system is arranged to distribute the mixed feed of the first batch discharged from the feed mixer and the second batch of mixed feed to different groups of animals, wherein the group of animals to which the feed distribution system is arranged to distribute the mixed feed of the first batch discharged from the feed mixer has a feed amount requirement which is less, preferably considerably less, than the entire amount of mixed feed of the first batch. Hereby, a fully automated or semi-automated feeding system by which a batch of mixed feed can be prepared in a large feed mixer and distributed to a very small group of animals.

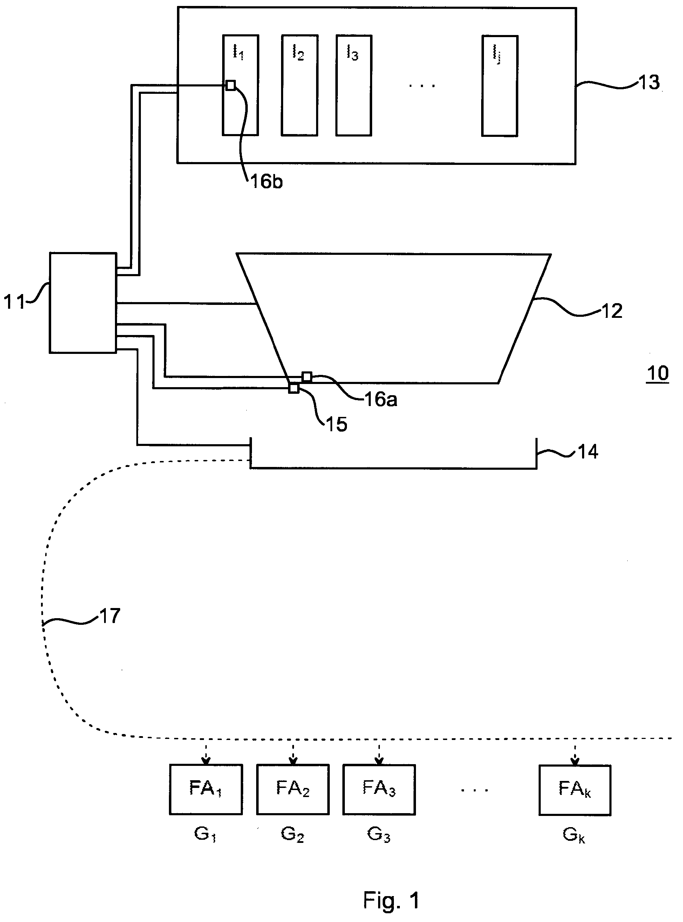

Further characteristics of the invention, and advantages thereof, will be evident from the following detailed description of embodiments of the invention given hereinafter and the accompanying Figs. 1-3, which are given byway of illustration only, and thus are not limitative of the present invention.

### BRIEF DESCRIPTION OF THE DRAWINGS

Fig. 1 shows, schematically, a feeding system comprising a feed mixer arrangement according to an embodiment of the invention.
Fig. 2 shows, schematically, a feeding system comprising a feed mixer arrangement according to a further embodiment of the invention.
Fig. 3 shows, schematically in a flowchart, a method for mixing batches of feed according to an embodiment of the invention.

### DETAILED DESCRIPTION OF EMBODIMENTS

Fig. 1 shows, schematically, a feeding system 10 for feeding groups G₁, G₂, G₃, ..., Gₖ of animals with mixed feed according to different recipes comprising a feed mixer arrangement for mixing batches of feed according to the selected recipes and a feed distribution system 14 for distributing the batches of mixed feed to the groups G₁, G₂, G₃, ..., Gₖ of animals.

The feed mixer arrangement comprises a control device 11 for the control of the feed mixer arrangement and its constituents, a feed mixer 12 operatively connected to the control device 11 and arranged for the mixing of feed ingredients I₁, I₂, ..., I₁, therein, and a charging arrangement 13 operatively connected to the control device and arranged for the charging of feed ingredients I₁, I₂, ..., Iⱼ according to selected recipes into the feed mixer 12. The feed mixer 12, which may be a vertical or horizontal stationary mixer, and the charging arrangement 13 are typically automated apparatuses and are operated under the control of the control device 11.

The feed ingredients I₁, I₂, ..., Iⱼ may comprise some of the following ones: hay, grass, straw, corn, minerals, molasses, water, concentrate, ensilaged grass, ensilaged corn, salt, and byproducts from beer, juice, and/or bread industry.

Optionally, the feed mixer arrangement comprises a weight sensor 15 or other sensor capable of measuring the amount of mixed feed in the feed mixer 12, and sensors 16a, 16b, such as NIR instruments, capable of measuring the content of water, and optionally other constituents, in the mixed feed in the feed mixer 12 as well as in one I₁ of the ingredients I₁, I₂, ..., Iⱼ. It shall be appreciated that there may be provided more sensors for measuring the content of water and/or of other constituents in some or each of the feed ingredients I₁, I₂, ..., Iⱼ. Each of the sensors 15, 16a, and 16b is operatively connected to the control device 11 and is arranged to forward measurement data thereto.

The feed distribution system 14 for distributing the batches of mixed feed to the different groups G₁, G₂, G₃, ..., Gₖ of animals may be a feed wagon, a feed conveyor, or a feed distribution vehicle which operates in a fully automated or semi-automated fashion along a feed distribution path 17 to distribute the batches of mixed feed to different feed areas FA₁, FA₂, FA₃, ..., FAₖ, each of which being accessible by a respective one of the different groups G₁, G₂, G₃, ..., Gₖ of animals.

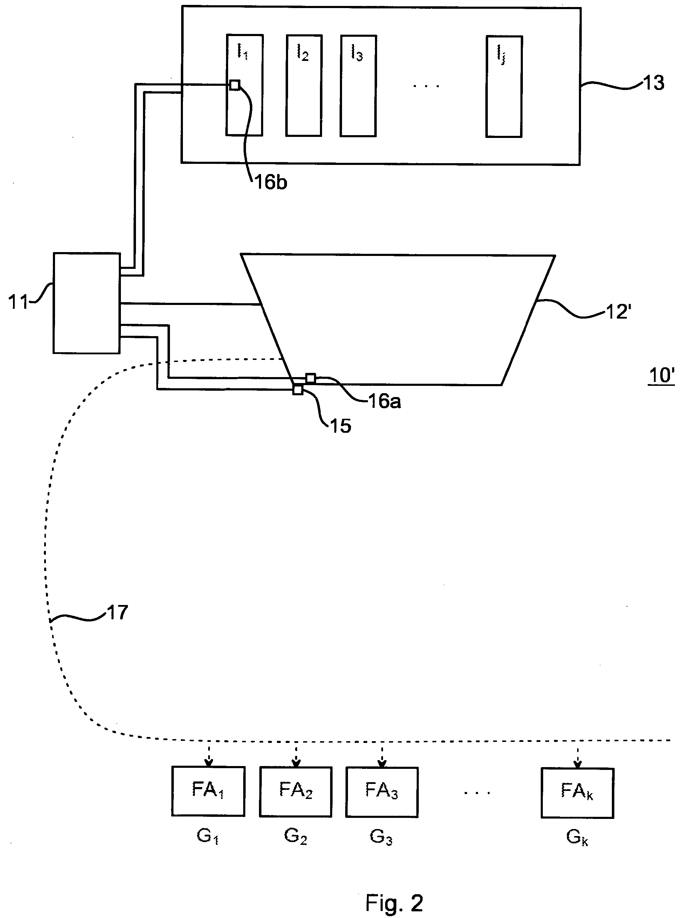

Fig. 2 shows, schematically, a feeding system 10' comprising a feed mixer arrangement according to a further embodiment of the invention. This embodiment differs from the embodiment of Fig. 1 in that the feed mixer 12 and the feed distribution system 14 are exchanged for a combined feed mixer and feed distribution system 12' which provides the functions of the feed mixer 12 and the feed distribution system 14 of fig. 1. Typically, the combined feed mixer and feed distribution system 12' is a mobile mixer wagon that moves between a feed ingredient charging position, at which the feed ingredients are charged into the mobile mixer wagon and the different feed areas FA₁, FA₂, FA₃, ..., FAₖ, to which the batches of mixed feed are distributed.

The grouping of the animals into different groups G₁, G₂ G₃,, ..., Gₖ can be made according to their milk production, age, stage of lactation, and/or body health.

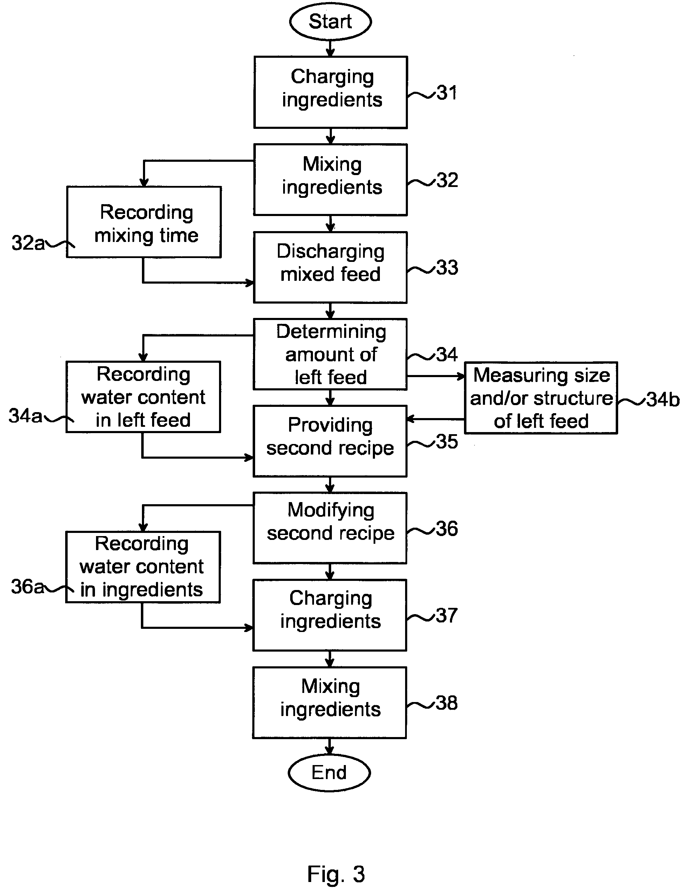

Considering now a situation where the feed distribution system 14 or the combined feed mixer and feed distribution system 12' is arranged to distribute mixed feed of a first batch of mixed feed and a second batch of mixed feed to different groups G₁, G₂ of animals, wherein the group G₁ of animals to which the feed distribution system 14 or the combined feed mixer and feed distribution system 12' is arranged to distribute mixed feed of the first batch has a feed amount requirement which is less, preferably considerably less, than the maximum loading capacity of the feed mixer 12 or the combined feed mixer and feed distribution system 12', such as e.g. between about 1-20 % thereof. In order to avoid a low charging of the feed mixer 12 or the combined feed mixer and feed distribution system 12' (with potential problems of reduced cutting and mixing performance and reduced accuracy in measuring the amounts of ingredients to be charged, which could lead to non-optimum feeding with respect to e.g. feed composition, structure, and particle size), the following method for mixing batches of feed according to an embodiment of the invention will be used. Reference is also made to Fig. 3, which shows, schematically in a flowchart, the method. Below, when referring to the feed mixer 12 and the feed distribution system 14, it shall be appreciated by a person skilled in the art, that alternatively the combined feed mixer and feed distribution system 12' may be used.

The control device 11 is arranged to control the charging arrangement 13, in a step 31, to charge the feed mixer 12 with ingredients 1I₁, 1I₂, 1I₃, ..., 1I₁, according to a first recipe 1R, which is over dimensioned with respect to the feed amount requirement of the animals of the group G₁. The first recipe 1R may, for instance, involve a filling level of the feed mixer of about 40-100 %, and more preferably 50-80%, of the maximum loading capacity of the feed mixer 12.

The control device 11 is then arranged to control the feed mixer 12, in a step 32, to mix the ingredients 1I₁, 1I₂, 1I₃, ..., 1I₁ according to the first recipe 1R, thereby producing a first batch of mixed feed according to the first recipe 1R. Subsequently thereto, the control device 11 is arranged to control the feed mixer 12, in a step 33, to discharge a portion of the mixed feed of the first batch 1R, which corresponds to the ration size that has been selected for the animals of the group G₁.

In the embodiment of Fig. 1 the feed mixer 12 discharges a portion of the mixed feed of the first batch 1R into the feed distribution system 14, which delivers the portion of the mixed feed of the first batch 1R to the feeding area FA₁, to which the animals of the group G₁ have access. In the embodiment of Fig. 2 the feed mixer 12' moves and delivers the portion of the mixed feed of the first batch 1R to the feeding area FA₁, after which it is returned to the feed ingredient charging position.

The sensor 15 is operatively connected to the control device 11, is arranged, in a step 34, to determine the amount of mixed feed of the first batch left in the feed mixer 12 after discharging, preferably by means of weighing, and is arranged to forward, to the control device 11, the determined amount of mixed feed of the first batch left in the feed mixer 12. Alternatively, the control device 11 determines the amount of mixed feed of the first batch left in the feed mixer 12 based on knowledge of total amount of mixed feed of the first batch and the knowledge (or measurement) of the amount of mixed feed of the first batch discharged in step 33. Concurrently therewith, the control device 11 is arranged to deduce, based on the first recipe 1R, the composition of the mixed feed of the first batch left in the feed mixer 12.

Next, the control device 11 is arranged, in a step 35, to provide a second recipe 2R according to which ingredients 2I₁, 2I₂, 2I₃, ..., 2Iₘ are to be charged into the feed mixer 12 in order to prepare a second batch of mixed feed to be fed to the group G₂ of animals. Subsequently thereto, the control device 11 is arranged, in a step 36, to modify the second recipe 2R based on the determined amount of mixed feed of the first batch left in the feed mixer 12 and the deduced composition thereof. The modified second recipe 2R* is determined such that the second batch of mixed feed will be a batch of mixed feed substantially according to the second recipe 2R or at least having a similar nutritional content as a batch of feed according to the second recipe 2R.

The control device 11 is then arranged, in a step 37, to control the charging arrangement 13 to charge the mixer 12 with ingredients 2I*₁, 2I*₂, 2I*₃, ..., 2I*ₙ according to the modified second recipe 2R* and, in a step 38, to control the feed mixer 12 to mix the ingredients 2I*₁, 2I*₂, 2I*₃, ..., 2I*ₙ according to the modified second recipe 2R* with mixed feed of the first batch left in the feed mixer 12, thereby producing the second batch of mixed feed, which in turn is discharged and fed to the animals of the group G₂.

By adding the feed according to the modified second recipe 2R* to the amount of mixed feed from first batch left in feed mixer it can bee seen that the second batch of mixed feed is a batch of mixed feed not exactly according to the second recipe. Since the amount of mixed feed from first batch left in feed mixer contained corn ensilage whereas the second recipe instead contains grass ensilage, the second batch of mixed feed comprises both corn ensilage and grass ensilage. However, still the second batch of mixed feed is a batch of mixed feed having a similar nutritional content as a batch of feed according to the second recipe.

Below, some optional features of the invention are described.

According to the inventive method, a content of water may, in a step 34a, be measured in the mixed feed of the first batch left in the feed mixer 12 after discharging by means of the sensor 16a. This step is performed after step 34 and most preferably concurrently with, or before, step 35. Similarly, a content of water may, in a step 36a, be measured in any of the ingredients 2I*₁, 2I*₂, 2I*₃, ..., 2I*ₙ according to the modified second recipe by means of the sensor 16b. This step is performed after step 36 and before step 37. Optionally, sensors are provided for measuring other constituents in the mixed feed of the first batch left in the feed mixer 12 after discharging and/or in any of the ingredients 2I*₁, 2I*₂, 2I*₃, ..., 2I*ₙ according to the modified second recipe 2R*.

The control device 11 can then, in the step 36, be arranged to further modify the second recipe depending on the measured content of water in in the mixed feed of the first batch left in the feed mixer 12 after discharging and/or in any of the ingredients 2I*₁, 2I*₂, 2I*₃, ..., 2I*ₙ according to the modified second recipe 2R*, and optionally depending on other constituents in the mixed feed of the first batch left in the feed mixer 12 after discharging and/or in any of the ingredients 2I*₁, 2I*₂, 2I*₃, ..., 2I*ₙ according to the modified second recipe 2R*.

Further, the control device 11 is, in the step 38, arranged to control the feed mixer 12 to mix the ingredients 2I*₁, 2I*₂, 2I*₃, ..., 2I*ₙ according to the modified second recipe 2R* with the mixed feed of the first batch left in the feed mixer 12 during a mixing time which is dependent on the measured content of water in in the mixed feed of the first batch left in the feed mixer 12 after discharging and/or in any of the ingredients 2I*₁, 2I*₂, 2I*₃, ..., 2I*ₙ according to the modified second recipe, optionally on other constituents in the mixed feed of the first batch left in the feed mixer 12 after discharging and/or in any of the ingredients 2I*₁, 2I*₂, 2I*₃, ..., 2I*ₙ according to the modified second recipe 2R*, on the first recipe 1R, on the determined amount of mixed feed of the first batch left in the feed mixer 12 after discharging, and/or on the deduced composition thereof.

Yet further, the mixing time during which the ingredients according to the first recipe 1R are mixed in the feed mixer 12 in the step 32 may, in a step 32a, be recorded or measured, and the control device 11 may, in the step 38, be arranged to control the feed mixer 12 to mix the ingredients 2I*₁, 2I*₂, 2I*₃, ..., 2I*ₙ according to the modified second recipe 2R* with the mixed feed of the first batch left in the feed mixer 12 during a mixing time which is dependent on the mixing time during which the ingredients according to the first recipe 1R were mixed in the feed mixer 12..

Still further, a characteristic representative of the particle size and/or structure of the mixed feed of the first batch left in the feed mixer after discharging may, in a step 34b, be measured. This step is performed after step 36 and before step 37. The control device 11 may then, in the step 38, be arranged to control the feed mixer 12 to mix the ingredients 2I*₁, 2I*₂, 2I*₃, ..., 2I*ₙ according to the modified second recipe 2R* with the mixed feed of the first batch left in the feed mixer 12 during a mixing time which is dependent on the measured characteristic.

It shall be appreciated that the invention is also applicable to a case wherein the first and second batches of feed discharged from the feed mixer are fed to the same group of animals but at different times, wherein the first and second recipes may be different with respect to the relative amounts of ingredients as well as with respect to the total amount of feed to be mixed.

While the invention has been described above by way of example, it shall be understood that the same may be varied in several details. In particular, the various features and embodiments disclosed above may be combined in a number of further ways readily available to a person skilled in the art to thereby form yet further embodiments of the invention. Further, embodiments of the invention may only comprise some of the features disclosed above with reference to a particular embodiment. The scope of the present patent is defined by the following claims.

## Claims

1. A method for mixing batches of feed according to selected recipes, wherein the batches of feed are to be fed to at least one group (G₁, G₂, G₃, ..., Gₖ) of animals, comprising the steps of:
- charging (31) a feed mixer (12; 12') with ingredients (1I₁, 1I₂, 1I₃, ..., 1I₁) according to a first recipe (1R);
- mixing (32) the ingredients according to the first recipe in the feed mixer, thereby producing a first batch of mixed feed according to the first recipe; and
- discharging (33) mixed feed of the first batch from the feed mixer, said method being
**characterized by** the steps of:
- determining (34) the amount of mixed feed of the first batch left in the feed mixer after discharging, and deducing the composition thereof based on the first recipe;
- providing (35) a second recipe (2R) according to which ingredients (2I₁, 2I₂, 2I₃, ..., 2Iₘ) are to be charged into the feed mixer;
- modifying (36) the second recipe based on the determined amount of mixed feed of the first batch left in the feed mixer and the deduced composition thereof;
- charging (37) the mixer with ingredients (2I*₁, 2I*₂, 2I*₃, ..., 2I*ₙ) according to the modified second recipe (2R*); and
- mixing (38) the ingredients according to the modified second recipe in the feed mixer with mixed feed of the first batch left in the feed mixer, thereby producing a second batch of mixed feed, wherein
- the modified second recipe is determined such that the second batch of mixed feed is a batch of mixed feed substantially according to the second recipe or having a similar nutritional content as a batch of feed according to the second recipe.

2. The method of claim 1 wherein the mixed feed of the first batch discharged from the feed mixer is to be fed to a group of animals (G₁) having a feed amount requirement which is less, preferably considerably less, than the entire amount of mixed feed of the first batch.

3. The method of claim 1 or 2 wherein the mixed feed of the first batch discharged from the feed mixer and the second batch of mixed feed discharged from the feed mixer are to be fed to different groups (G₁, G₂) of animals.

4. The method of any of claims 1-3 wherein the amount of mixed feed of the first batch left in the feed mixer after discharging is determined by means of weighing.

5. The method of any of claims 1-4 wherein the first and second recipes are different.

6. The method of any of claims 1-5 wherein the ingredients according to the first and second recipes are different.

7. The method of any of claims 1-6 wherein the ingredients according to the second and modified second recipes are different.

8. The method of any of claims 1-7 comprising the step of measuring (36a, 34a) a content of water, and optionally other constituents, in any of the ingredients according to the modified second recipe and/or in the mixed feed of the first batch left in the feed mixer after discharging, wherein the second recipe is further modified depending on the measured content of water and optionally other constituents, in any of the ingredients according to the modified second recipe and/or in the mixed feed of the first batch left in the feed mixer after discharging.

9. The method of any of claims 1-8 wherein the mixing of the ingredients according to the modified second recipe with the mixed feed of the first batch left in the feed mixer is performed during a mixing time which is dependent on the first recipe, on the determined amount of mixed feed of the first batch left in the feed mixer after discharging, and/or on the deduced composition thereof.

10. The method of any of claims 1-9 wherein the mixing time during which the ingredients according to the first recipe are mixed in the feed mixer is recorded (32a), and the mixing of the ingredients according to the modified second recipe with the mixed feed of the first batch left in the feed mixer is performed during a mixing time which is dependent on the mixing time during which the ingredients according to the first recipe were mixed in the feed mixer.

11. The method of any of claims 1-10 comprising the step of measuring (34b) a characteristic representative of the particle size and/or structure of the mixed feed of the first batch left in the feed mixer after discharging, wherein the mixing of the ingredients according to the modified second recipe with the mixed feed of the first batch left in the feed mixer is performed during a mixing time which is dependent on the measured characteristic.

12. The method of any of claims 1-11 comprising the step of measuring (36a, 34a) a content of water in any of the ingredients according to the modified second recipe or in the mixed feed of the first batch left in the feed mixer after discharging, wherein the mixing of the ingredients according to the modified second recipe with the mixed feed of the first batch left in the feed mixer is performed during a mixing time which is dependent on the measured content of water.

13. A feed mixer arrangement for mixing batches of feed according to selected recipes, wherein the batches of feed are to be fed to at least one group (G₁, G₂, G₃, ..., Gₖ) of animals, comprising a control device (11), a feed mixer (12; 12') operatively connected to the control device, and a charging arrangement (13) operatively connected to the control device, wherein the control device is arranged (i) to control the charging arrangement to charge the feed mixer with ingredients (1I₁, 1I₂, 1I₃, ..., 1I₁) according to a first recipe (1R), (ii) to control the feed mixer to mix the ingredients according to the first recipe, thereby producing a first batch of mixed feed according to the first recipe; and (iii) to control the feed mixer to discharge a portion of the mixed feed of the first batch, said feed mixer arrangement being **characterized in that** the feed mixer arrangement comprises:
- determining means (15) arranged to determine the amount of mixed feed of the first batch left in the feed mixer after discharging, wherein
- the control device is arranged
(iv) to deduce, based on the first recipe, the composition of the mixed feed of the first batch left in the feed mixer,
(v) to provide a second recipe (2R) according to which ingredients (2I₁, 2I₂, 2I₃, ..., 2Iₘ) are to be charged into the feed mixer,
(vi) to modify the second recipe based on the determined amount of mixed feed of the first batch left in the feed mixer and the deduced composition thereof,
(vii) to control the charging arrangement to charge the mixer with ingredients (2I*₁, 2I*₂, 2I*₃, ..., 2I*ₙ) according to the modified second recipe (2R*), and
(viii) to control the feed mixer to mix the ingredients according to the modified second recipe with mixed feed of the first batch left in the feed mixer, thereby producing a second batch of mixed feed, wherein the modified second recipe is determined such that the second batch of mixed feed is a batch of mixed feed substantially according to the second recipe or having a similar nutritional content as a batch of feed according to the second recipe.

14. A feeding system (10; 10') for feeding different groups (G₁, G₂, G₃, ..., Gₖ) of animals with mixed feed according to different recipes comprising a feed distribution system (14) and the feed mixer arrangement of claim 13.

15. The feeding system of claim 14 wherein the feed distribution system is arranged to distribute the mixed feed of the first batch discharged from the feed mixer and the second batch of mixed feed discharged from the feed mixer to different groups (G₁, G₂) of animals, wherein the group (G₁) of animals to which the feed distribution system is arranged to distribute the mixed feed of the first batch discharged from the feed mixer has a feed amount requirement which is less, preferably considerably less, than the entire amount of mixed feed of the first batch.

## Patentansprüche

1. Verfahren zum Mischen von Futterchargen nach ausgewählten Rezepten, wobei die Futterchargen an mindestens eine Gruppe (G1, G₂, G₃, ..., Gₖ) von Tieren verfüttert werden sollen, das folgende Schritte umfasst:
- Befüllen (31) eines Futtermischers (12; 12') mit Zutaten (1l₁, 1l₂, 1l₃,..., 1lₗ,) nach einem ersten Rezept (1 R);
- Mischen (32) der Zutaten nach dem ersten Rezept in dem Futtermischer, wodurch eine erste Charge Mischfutter nach dem ersten Rezept hergestellt wird; und
- Entleeren (33) von Mischfutter der ersten Charge aus dem Futtermischer, wobei das Verfahren **gekennzeichnet ist durch** folgende Schritte:
- Bestimmen (34) der Menge Mischfutter der ersten Charge, das nach dem Entleeren in dem Futtermischer übrigbleibt, und Ableiten der Zusammensetzung davon auf der Grundlage des ersten Rezepts;
- Bereitstellen (35) eines zweiten Rezepts (2R), nach dem der Futtermischer mit Zutaten (2l₁, 2l₂, 2l₃,..., 2lₘ) befüllt werden soll;
- Abändern (36) des zweiten Rezepts auf der Grundlage der bestimmten Menge Mischfutter der ersten Charge, das in dem Futtermischer übrigbleibt, und der abgeleiteten Zusammensetzung davon;
- Befüllen (37) des Mischers mit Zutaten (2l*₁, 2l*₂, 2l*₃,..., 2l*ₙ) nach dem abgeänderten zweiten Rezept (2R*); und
- Mischen (38) der Zutaten nach dem abgeänderten zweiten Rezept in dem Futtermischer mit Mischfutter der ersten Charge, das in dem Futtermischer übrigbleibt, wodurch eine zweite Charge Mischfutter hergestellt wird, wobei
- das abgeänderte zweite Rezept so bestimmt wird, dass die zweite Charge Mischfutter eine Charge Mischfutter im Wesentlichen nach dem zweiten Rezept ist oder einen ähnlichen Nährstoffgehalt wie eine Futtercharge nach dem zweiten Rezept aufweist.

2. Verfahren nach Anspruch 1, wobei das Mischfutter der ersten Charge, das aus dem Futtermischer entleert wurde, an eine Gruppe von Tieren (G₁) verfüttert werden soll, die einen Futtermengenbedarf hat, der geringer, vorzugsweise erheblich geringer, als die Gesamtmenge Mischfutter der ersten Charge ist.

3. Verfahren nach Anspruch 1 oder 2, wobei das Mischfutter der ersten Charge, das aus dem Futtermischer entleert wurde, und die zweite Charge Mischfutter, das aus dem Futtermischer entleert wurde, an unterschiedliche Gruppen (G₁, G₂) von Tieren verfüttert werden sollen.

4. Verfahren nach einem der Ansprüche 1 bis 3, wobei die Menge Mischfutter der ersten Charge, das nach dem Entleeren in dem Futtermischer übrigbleibt, mittels Wiegen bestimmt wird.

5. Verfahren nach einem der Ansprüche 1 bis 4, wobei sich das erste und zweite Rezept unterscheiden.

6. Verfahren nach einem der Ansprüche 1 bis 5, wobei sich die Zutaten nach dem ersten und zweiten Rezept unterscheiden.

7. Verfahren nach einem der Ansprüche 1 bis 6, wobei sich die Zutaten nach dem zweiten und abgeänderten zweiten Rezept unterscheiden.

8. Verfahren nach einem der Ansprüche 1 bis 7, das den Schritt des Messens (36a, 34a) eines Gehalts von Wasser, und optional weiterer Bestandteile, in jedem beliebigen der Zutaten nach dem abgeänderten zweiten Rezept und/oder in dem Mischfutter der ersten Charge umfasst, das nach dem Entleeren in dem Futtermischer übrigbleibt, wobei das zweite Rezept je nach dem gemessenen Gehalt von Wasser und optional weiterer Bestandteile in jedem beliebigen der Zutaten nach dem abgeänderten zweiten Rezept und/oder in dem Mischfutter der ersten Charge, das nach dem Entleeren in dem Futtermischer übrigbleibt, weiter abgeändert wird.

9. Verfahren nach einem der Ansprüche 1 bis 8, wobei das Mischen der Zutaten nach dem abgeänderten zweiten Rezept mit dem Mischfutter der ersten Charge, das in dem Futtermischer übrigbleibt, während einer Mischzeit erfolgt, die von dem ersten Rezept, von der bestimmten Menge Mischfutter der ersten Charge, das nach dem Entleeren in dem Futtermischer übrigbleibt, und/oder von der abgeleiteten Zusammensetzung davon abhängig ist.

10. Verfahren nach einem der Ansprüche 1 bis 9, wobei die Mischzeit, während der die Zutaten nach dem ersten Rezept in dem Futtermischer gemischt werden, aufgezeichnet (32a) wird und das Mischen der Zutaten nach dem abgeänderten zweiten Rezept mit dem Mischfutter der ersten Charge, das in dem Futtermischer übrigbleibt, während einer Mischzeit erfolgt, die von der Mischzeit abhängig ist, während der die Zutaten nach dem ersten Rezept in dem Futtermischer gemischt wurden.

11. Verfahren nach einem der Ansprüche 1 bis 10, das den Schritt des Messens (34b) einer Eigenschaft umfasst, die die Partikelgröße und/oder Struktur des Mischfutters der ersten Charge darstellt, das nach dem Entleeren in dem Futtermischer übrigbleibt, wobei das Mischen der Zutaten nach dem abgeänderten zweiten Rezept mit dem Mischfutter der ersten Charge, das in dem Futtermischer übrigbleibt, während einer Mischzeit erfolgt, die von der gemessenen Eigenschaft abhängig ist.

12. Verfahren nach einem der Ansprüche 1 bis 11, das den Schritt des Messens (36a, 34a) eines Gehalts von Wasser in jedem beliebigen der Zutaten nach dem abgeänderten zweiten Rezept oder in dem Mischfutter der ersten Charge umfasst, das nach dem Entleeren in dem Futtermischer übrigbleibt, wobei das Mischen der Zutaten nach dem abgeänderten zweiten Rezept mit dem Mischfutter der ersten Charge, das in dem Futtermischer übrigbleibt, während einer Mischzeit erfolgt, die von dem gemessenen Wassergehalt abhängig ist.

13. Futtermischeranordnung zum Mischen von Futterchargen nach ausgewählten Rezepten, wobei die Futterchargen an mindestens eine Gruppe (G₁, G₂, G₃,..., Gₖ) von Tieren verfüttert werden sollen, die eine Steuereinrichtung (11), einen Futtermischer (12; 12'), der funktionsmäßig mit der Steuereinrichtung verbunden ist, und eine Befüllungsanordnung (13) umfasst, die funktionsmäßig mit der Steuereinrichtung verbunden ist, wobei die Steuereinrichtung so angeordnet ist, dass sie (i) die Befüllungsanordnung so steuert, dass sie den Futtermischer mit Zutaten (1l₁, 1l₂, 1l₃,..., 1lₗ,) nach einem ersten Rezept (1R) befüllt, (ii) den Futtermischer so steuert, dass er die Zutaten nach dem ersten Rezept mischt, wodurch eine erste Charge Mischfutter nach dem ersten Rezept hergestellt wird; und (iii) den Futtermischer so steuert, dass er einen Teil des Mischfutters der ersten Charge entleert, wobei die Futtermischeranordnung **dadurch gekennzeichnet ist, dass** die Futtermischeranordnung Folgendes umfasst:
- Bestimmungsmittel (15), die so angeordnet sind, dass sie die Menge Mischfutter der ersten Charge, das nach dem Entleeren in dem Futtermischer übrigbleibt, bestimmen, wobei
- die Steuereinrichtung so angeordnet ist, dass sie
(iv) auf der Grundlage des ersten Rezepts die Zusammensetzung des Mischfutters der ersten Charge, das in dem Futtermischer übrigbleibt, ableitet,
(v) ein zweites Rezept (2R) bereitstellt, nach dem der Futtermischer mit Zutaten (2l₁, 2l₂, 2l₃,..., 2lₘ) befüllt werden soll,
(vi) das zweite Rezept auf der Grundlage der bestimmten Menge Mischfutter der ersten Charge, das in dem Futtermischer übrigbleibt, und der abgeleiteten Zusammensetzung davon abändert,
(vii) die Befüllungsanordnung so steuert, dass sie den Mischer mit Zutaten (2l*₁, 2l*₂, 2l*₃,..., 2l*ₙ) nach dem abgeänderten zweiten Rezept (2R*) befüllt, und
(viii) den Futtermischer so steuert, dass er die Zutaten nach dem abgeänderten zweiten Rezept mit Mischfutter der ersten Charge mischt, das in dem Futtermischer übrigbleibt, wodurch eine zweite Charge Mischfutter hergestellt wird, wobei das abgeänderte zweite Rezept so bestimmt wird, dass die zweite Charge Mischfutter eine Charge Mischfutter im Wesentlichen nach dem zweiten Rezept ist oder einen ähnlichen Nährstoffgehalt wie eine Futtercharge nach dem zweiten Rezept aufweist.

14. Fütterungssystem (10; 10') zum Füttern verschiedener Gruppen (G₁, G₂, G₃,..., Gₖ) von Tieren mit Mischfutter nach verschiedenen Rezepten, das ein Futterverteilsystem (14) und die Futtermischeranordnung nach Anspruch 13 umfasst.

15. Fütterungssystem nach Anspruch 14, wobei das Futterverteilsystem so angeordnet ist, dass es das Mischfutter der ersten Charge, das aus dem Futtermischer entleert wird, und die zweite Charge Mischfutter, die aus dem Futtermischer entleert wird, an verschiedene Gruppen (G₁, G₂) von Tieren verteilt, wobei die Gruppe (G₁) von Tieren, an die das Futterverteilsystem das Mischfutter der ersten Charge verteilen soll, das aus dem Futtermischer entleert wurde, einen Futtermengenbedarf hat, der geringer, vorzugsweise erheblich geringer, als die Gesamtmenge Mischfutter der ersten Charge ist.

## Revendications

1. Procédé pour mélanger des lots d'aliments selon des recettes sélectionnées, les lots d'aliments devant être donnés à manger à au moins un groupe (G₁, G₂, G₃, ..., Gₖ) d'animaux, comprenant les étapes consistant à :
- charger (31) un mélangeur d'aliments (12 ; 12') avec des ingrédients (1l₁, 1l₂, 1l₃, ..., 1lₗ) selon une première recette (1 R) ;
- mélanger (32) les ingrédients selon la première recette dans le mélangeur d'aliments, produisant ainsi un premier lot d'aliments mélangés selon la première recette ; et
- décharger (33) du mélangeur d'aliments des aliments mélangés du premier lot, ledit procédé étant **caractérisé par** les étapes consistant à :
- déterminer (34) la quantité d'aliments mélangés du premier lot restant dans le mélangeur d'aliments après le déchargement, et déduire la composition de ceux-ci sur la base de la première recette ;
- mettre à disposition (35) une seconde recette (2R) selon laquelle des ingrédients (2l₁, 2l₂, 2l₃, ..., 2lₘ) doivent être chargés dans le mélangeur d'aliments;
- modifier (36) la seconde recette sur la base de la quantité déterminée d'aliments mélangés du premier lot restant dans le mélangeur d'aliments et de la composition déduite de ceux-ci ;
- charger (37) le mélangeur avec des ingrédients (2l*₁, 2l*₂, 2l*₃, ..., 2l*ₙ) selon la seconde recette modifiée (2R*); et
- mélanger (38) les ingrédients selon la seconde recette modifiée dans le mélangeur d'aliments avec des aliments mélangés du premier lot restant dans le mélangeur d'aliments, produisant ainsi un second lot d'aliments mélangés,
- la seconde recette modifiée étant déterminée de telle manière que le second lot d'aliments mélangés est un lot d'aliments mélangés essentiellement selon la seconde recette ou présentant une valeur nutritive similaire à un lot d'aliments selon la seconde recette.

2. Procédé selon la revendication 1, dans lequel les aliments mélangés du premier lot déchargés du mélangeur d'aliments doivent être donnés à manger à un groupe d'animaux (G₁) présentant un besoin en quantité d'aliments qui est inférieur, de préférence considérablement inférieur, à la quantité entière d'aliments mélangés du premier lot.

3. Procédé selon la revendication 1 ou 2, dans lequel les aliments mélangés du premier lot déchargés du mélangeur d'aliments et le second lot d'aliments mélangés déchargés du mélangeur d'aliments doivent être donnés à manger à différents groupes (G₁, G₂) d'animaux.

4. Procédé selon l'une quelconque des revendications 1 à 3, dans lequel la quantité d'aliments mélangés du premier lot restant dans le mélangeur d'aliments après le déchargement est déterminée par pesage.

5. Procédé selon l'une quelconque des revendications 1 à 4, dans lequel la première et la seconde recette sont différentes.

6. Procédé selon l'une quelconque des revendications 1 à 5, dans lequel les ingrédients selon la première et la seconde recette sont différents.

7. Procédé selon l'une quelconque des revendications 1 à 6, dans lequel les ingrédients selon la seconde recette et la seconde recette modifiée sont différents.

8. Procédé selon l'une quelconque des revendications 1 à 7, comprenant l'étape consistant à mesurer (36a, 34a) une teneur en eau, et facultativement en d'autres constituants, dans n'importe lequel des ingrédients selon la seconde recette modifiée et/ou dans les aliments mélangés du premier lot restant dans le mélangeur d'aliments après le déchargement, la seconde recette étant modifiée encore en fonction de la teneur en eau, et facultativement en d'autres constituants, mesurée, dans n'importe lequel des ingrédients selon la seconde recette modifiée et/ou dans les aliments mélangés du premier lot restant dans le mélangeur d'aliments après le déchargement.

9. Procédé selon l'une quelconque des revendications 1 à 8, dans lequel le mélange des ingrédients selon la seconde recette modifiée avec les aliments mélangés du premier lot restant dans le mélangeur d'aliments est effectué pendant un temps de mélange qui est dépendant de la première recette, de la quantité déterminée d'aliments mélangés du premier lot restant dans le mélangeur d'aliments après le déchargement, et/ou de la composition déduite de ceux-ci.

10. Procédé selon l'une quelconque des revendications 1 à 9, dans lequel le temps de mélange pendant lequel les ingrédients selon la première recette sont mélangés dans le mélangeur d'aliments est enregistré (32a), et le mélange des ingrédients selon la seconde recette modifiée avec les aliments mélangés du premier lot restant dans le mélangeur d'aliments est effectué pendant un temps de mélange qui est dépendant du temps de mélange pendant lequel les ingrédients selon la première recette ont été mélangés dans le mélangeur d'aliments.

11. Procédé selon l'une quelconque des revendications 1 à 10, comprenant l'étape consistant à mesurer (34b) une caractéristique représentative de la taille de particule et/ou de la structure des aliments mélangés du premier lot restant dans le mélangeur d'aliments après le déchargement, le mélange des ingrédients selon la seconde recette modifiée avec les aliments mélangés du premier lot restant dans le mélangeur d'aliments étant effectué pendant un temps de mélange qui est dépendant de la caractéristique mesurée.

12. Procédé selon l'une quelconque des revendications 1 à 11, comprenant l'étape consistant à mesurer (36a, 34a) une teneur en eau dans n'importe lequel des ingrédients selon la seconde recette modifiée ou dans les aliments mélangés du premier lot restant dans le mélangeur d'aliments après le déchargement, le mélange des ingrédients selon la seconde recette modifiée avec les aliments mélangés du premier lot restant dans le mélangeur d'aliments étant effectué pendant un temps de mélange qui est dépendant de la teneur en eau mesurée.

13. Agencement de mélangeur d'aliments pour mélanger des lots d'aliments selon des recettes sélectionnées, les lots d'aliments devant être donnés à manger à au moins un groupe (G₁, G₂, G₃, ..., Gₖ) d'animaux, comprenant un dispositif de commande (11), un mélangeur d'aliments (12 ; 12') relié de manière fonctionnelle au dispositif de commande, et un agencement de chargement (13) relié de manière fonctionnelle au dispositif de commande, le dispositif de commande étant agencé (i) pour commander l'agencement de chargement afin qu'il charge le mélangeur d'aliments avec des ingrédients (1l₁, 1l₂, 1l₃, ..., 1lₗ,) selon une première recette (1 R), (ii) pour commander le mélangeur d'aliments afin qu'il mélange les ingrédients selon la première recette, produisant ainsi un premier lot d'aliments mélangés selon la première recette ; et (iii) pour commander le mélangeur d'aliments afin qu'il décharge une partie des aliments mélangés du premier lot, ledit agencement de mélangeur d'aliments étant **caractérisé en ce que** l'agencement de mélangeur d'aliments comprend :
- des moyens de détermination (15) agencés pour déterminer la quantité d'aliments mélangés du premier lot restant dans le mélangeur d'aliments après le déchargement,
- le dispositif de commande étant agencé
(iv) pour déduire, sur la base de la première recette, la composition des aliments mélangés du premier lot restant dans le mélangeur d'aliments,
(v) pour mettre à disposition une seconde recette (2R) selon laquelle des ingrédients (2l₁, 2l₂, 2l₃, ..., 2lₘ) doivent être chargés dans le mélangeur d'aliments,
(vi) pour modifier la seconde recette sur la base de la quantité déterminée d'aliments mélangés du premier lot restant dans le mélangeur d'aliments et de la composition déduite de ceux-ci,
(vii) pour commander l'agencement de chargement afin qu'il charge le mélangeur avec des ingrédients (2l*₁, 2l*₂, 2l*₃, ..., 2l*ₙ) selon la seconde recette modifiée (2R*), et
(viii) pour commander le mélangeur d'aliments afin qu'il mélange les ingrédients selon la seconde recette modifiée avec des aliments mélangés du premier lot restant dans le mélangeur d'aliments, produisant ainsi un second lot d'aliments mélangés, la seconde recette modifiée étant déterminée de telle manière que le second lot d'aliments mélangés est un lot d'aliments mélangés essentiellement selon la seconde recette ou présentant une valeur nutritive similaire à un lot d'aliments selon la seconde recette.

14. Système d'alimentation (10 ; 10') destiné à l'alimentation de différents groupes (G₁, G₂, G₃, ..., Gₖ) d'animaux avec des aliments mélangés selon différentes recettes comprenant un système de distribution d'aliments (14) et l'agencement de mélangeur d'aliments selon la revendication 13.

15. Système d'alimentation selon la revendication 14, dans lequel le système de distribution d'aliments est agencé pour distribuer les aliments mélangés du premier lot déchargés du mélangeur d'aliments et le second lot d'aliments mélangés déchargés du mélangeur d'aliments à différents groupes (G₁, G₂) d'animaux, le groupe (G₁) d'animaux auquel le système de distribution d'aliments est destiné à distribuer des aliments mélangés du premier lot déchargés du mélangeur d'aliments présentant un besoin en quantité d'aliments qui est inférieur, de préférence considérablement inférieur, à la quantité entière d'aliments mélangés du premier lot.
